# EUROPEAN PATENT APPLICATION

(11) **EP 1 980 981 A1**
(43) Date of publication of application: **15.10.2008**
(21) Application number: 08152141.1
(22) Date of filing: 29.02.2008
(51) Int. Cl.: G06Q 10/00

(54) **Method and apparatus for distribution of sale-or-return products supported by RFID tags**

(30) Priority: 01.03.2007 IT MI20070413
(71) Applicant: Didelme Sistemi S.r.l., Castellanza (IT)
(72) Inventor: Borghi, Luigi Aurelio, 20149, MILANO (IT)
(74) Representative: Jorio, Paolo

(57) **Abstract**

An apparatus for distribution of sale-or-return products has: a plurality of products (2, 8) including sale-or-return products (2) and returned products (8); a distribution centre (10) for distribution of sale-or-return products (2); a sales point (14) for the sale-or-return products (2); and flow-management means (9), for managing a flow of sale-or-return products (2) from the distribution centre (10) to the sales point (14) and a flow of returned products (8) from the sales point (14) to the distribution centre (10); the flow-management means (9) comprise RFID (radio-frequency identification) tags (25, 28, 32, 35), associated to the sale-or-return products (2) and to the returned products (8), and RFID read-and-write means (26, 31, 34, 39, 43, 52).

## Description

The present invention relates to a method and apparatus for distribution of sale-or-return products supported by RFID (radio-frequency identification) tags. In particular, the present invention relates to a method and apparatus for distributing sale-or-return publishing-trade products supported by RFID tags, it being understood that the method and apparatus according to the present invention are of general application and can be used for distributing almost any type of sale-or-return product.

The distribution of sale-or-return products envisages that one or more production centres - which, in the case of distribution of publishing-trade products is represented by one or more publishers or by third parties that provide for production of publishing-trade products on behalf of the publisher - use a network of national and local distribution centres, each of which is responsible for restocking a series of points of sale to the public, which, in the case of distribution of publishing-trade products, may be newspaper kiosks, supermarkets, bars, tobacconists, and other kinds of commercial establishments.

The points of sale to the public receive the sale-or-return products; i.e., the products remain in the sales point for a pre-set period of time, and then the unsold articles are returned to the distribution centres and, from these, to the production centres. Not only the step of distribution to the sales points but also the management of the returned products is of particular importance because invoicing is linked only to the number of products actually sold. The distribution centres must consequently perform numerous operations of receipt of goods, sorting, and also control, for reducing the possibility of any attempts at fraud. These activities must be performed also by the production centres in order to control the activities of the distribution centres.

Currently, however, said operations are performed in an almost completely manual way by the competent staff provided with a certain level of training. It is therefore evident that the management of the distribution centres is rather inefficient and involves a series of drawbacks.

First of all, manual control is very costly and not always reliable.

In addition, manual control requires long times, which are to be added to the times for collecting the returned products throughout the territory in which the products are distributed. The information on the return of products is in fact available to the production centre and/or to the customer of the production centre only after days or weeks, and it is thus difficult for the production centres and for their customers to analyse, for example, the results of a sales drive. For instance, in the case of the distribution of publishing-trade products, the publisher would need to know as soon as possible the effective number of the products returned, to be able to evaluate in the short term the result of his own investments, such as, for example, the promotion by means of attachments, inserts, etc.

Finally, with the current sale-or-return system, the management of stocks that have run out and, in the case of publishing-trade products, also of the back issues is very burdensome and slow and has a negative effect on the quality perceived by the customer.

An aim of the present invention is to provide a method and an apparatus for distribution of sale-or-return products that are free from the drawbacks of the known art highlighted herein. In particular, an aim of the invention is to provide a method and an apparatus for distribution of sale-or-return products that are as automated as possible and enable reliable data to be obtained in a short time.

In accordance with said purposes, the present invention relates to an apparatus and a method for distribution of sale-or-return products, as claimed in Claims 1 and 10, respectively.

Further characteristics and advantages of the present invention will emerge clearly from the ensuing description of a non-limiting example of embodiment thereof, with reference to the figures of the annexed drawings, wherein:
- Figure 1 is a simplified block diagram of the apparatus for distribution of sale-or-return products supported by RFID tags according to the present invention.
- Figure 2 is a simplified block diagram of a first detail of the apparatus of Figure 1;
- Figure 3 is a schematic representation of a second detail of the apparatus of Figure 1; and
- Figure 4 is a schematic representation of a third detail of the apparatus of Figure 1.

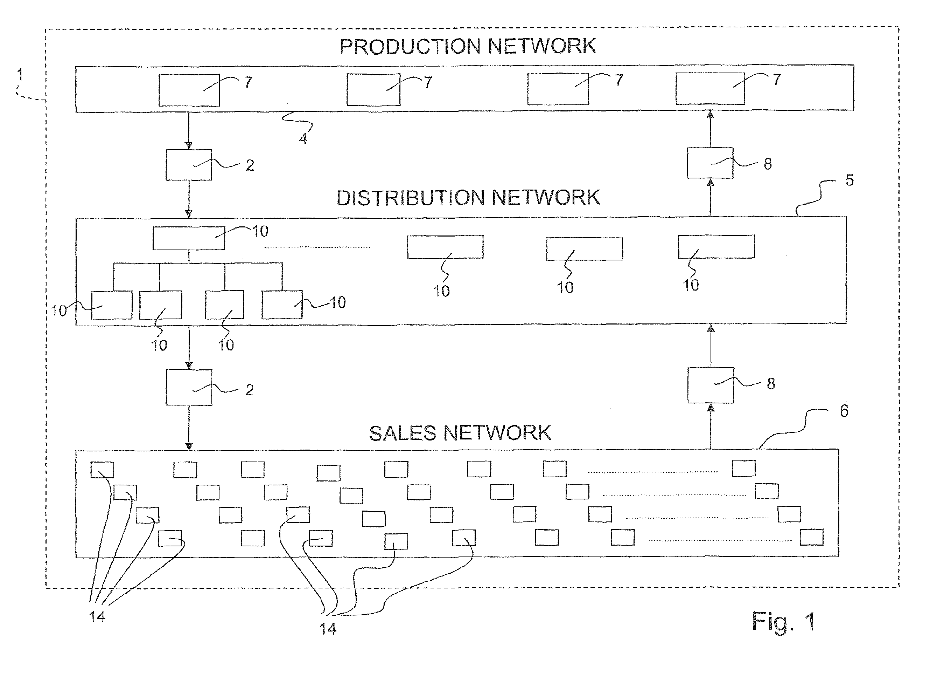

An apparatus for distribution of sale-or-return products 2 is designated by the reference number 1 in Figure 1. Described hereinafter, purely by way of example, is an apparatus 1 for distributing publishing-trade products, it being understood that the apparatus 1 can be used for managing distribution of any sale-or-return product.

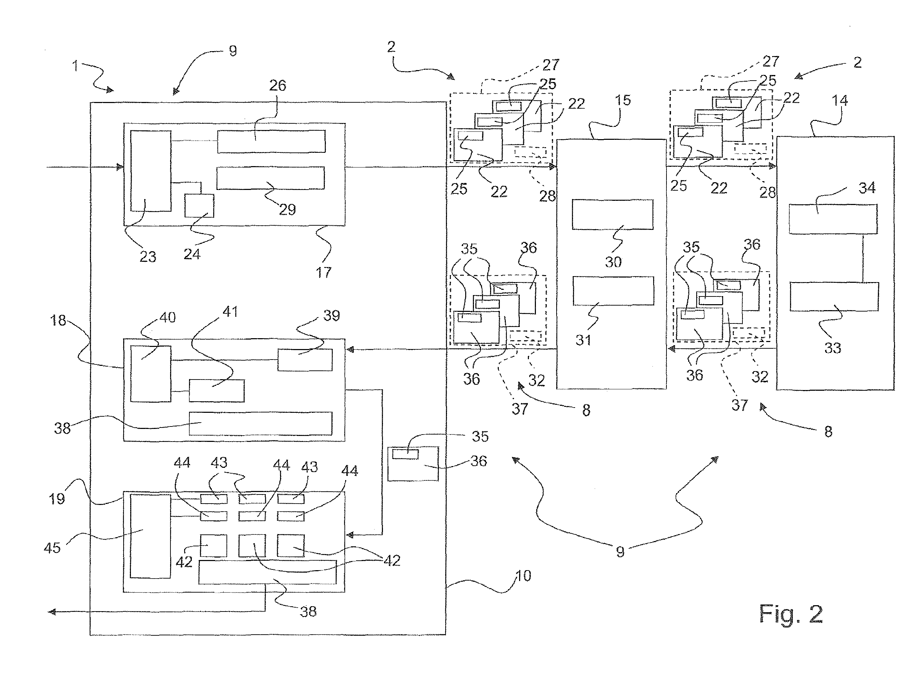

The apparatus 1 comprises a production network 4, a distribution network 5, and a sales network 6, as well as means for management of the flow 9 (illustrated in Figure 2).

The production network 4 is responsible for the production of publishing-trade products 2 and comprises a plurality of production centres 7, which, in the specific case of distribution of publishing-trade products 2, are publishers and/or third parties that produce the publishing-trade products 2 on behalf of the publishers. By "publishing-trade products" 2 is meant newspapers, magazines, books, audio and video material, periodic publications of any type, and all the corresponding attachments and inserts.

The distribution network 5 receives the publishing-trade products 2 from the production network 4 and supplies them to the sales network 6; in addition, the distribution network 5 gathers from the sales network 6 unsold publishing-trade products 2, hereinafter referred to as returned products 8, and forwards them to the production centres 7 or, possibly, is responsible for disposal thereof.

In particular, the distribution network 5 comprises a plurality of distribution centres 10 organized on a territorial basis and possibly in a hierarchical way. For example, portions of the distribution network 5 are organized on just one hierarchical level. In this case, the distribution centres 10 receive the products from the production network 4 and directly supply the sales network 6. Other portions of the distribution network 5 can be organized on two (or more) hierarchical levels, with respective territorial areas of competence. In this case, the distribution centres 10 of higher hierarchical level, with wider territorial competence, supply distribution centres 10 of lower hierarchical level, which provide for sorting the products 2 locally and in a capillary way in the sales network 6. Obviously, the portions of the distribution network 5 with several hierarchical levels are organized for managing in a symmetrical way also the returned products 8. In practice, the returned products 8 are collected by the distribution centres 10 of lower hierarchical level and forwarded to the distribution centres 10 of higher hierarchical level, which provide for the restitution of the returned products 8 to the production network 4.

The sales network 6 sells the products 2 to the public and sends back to the distribution network 5 the returned products 8, i.e., the publishing-trade products 2 that have remained unsold.

In particular, the sales network 6 comprises a plurality of sales points 14, such as, for example, newspaper kiosks, supermarkets, and service stations.

The flow-management means 9, as will be described in detail hereinafter, manage the flow of sale-or-return products 2 from the distribution centre 10 to the sales point 14 and the flow of returned products 8 from the sales point 14 to the distribution centre 10.

The transport operations from the production network 4 to the distribution network 5 are made by a transporting service (not illustrated in the annexed figures).

With reference to Figure 2, the transport operations between the distribution network 5 and the sales network 6 are made by a transporting service 15.

Figure 2 illustrates in greater detail the structure of one of the automated distribution centres 10 (in particular, in a portion of distribution network 5 having only one level or else a distribution centre 10 of the lowest hierarchical level). Preferably, all the distribution centres 10 of the apparatus 1 are of the type described hereinafter. However, some distribution centres 10 could be organized in a conventional way.

The automated distribution centre 10 comprises a shipping station 17, a returned-products loading station 18 and a sorting station 19.

The shipping station 17 is adapted to prepare packages 22 of publishing-trade products 2 to be sent to each sales point 14. A package 22 to be sent to a sales point 14 contains a number of copies of a same product 2, established on the basis of different parameters, such as, for example, specific orders provided by the production network 4 and criteria defined by the distribution centre 10 (possibly, a package 22 may be constituted even by just one copy of a product 2).

The flow-management means 9 comprise a shipping control unit 23, a weighing device 24, RFID tags 25 and 28, of a passive or active type according to the needs, an RFID read/write device 26, a conveyor belt 29, means of transport 30, in general lorries, a transport RFID read/write device 31, a sales processor 33, an RFID read/write device 34, and RFID tags 32 and 35, which are also of a passive type or an active type according to the needs.

The shipping control unit 23 (for example, a personal computer) is located in the shipping station 17 and contains data on the amount of products 2 to be sent to each sales point 14.

The shipping control unit 23 is associated to the RFID read/write device 26, which enables storage of data in the RFID tags 25 to be applied to respective packages 22 and in the RFID tags 28 to be applied to boxes 27, which preferably contain the packages 22 addressed to a same sales point 14.

In particular, the shipping control unit 23 records in the RFID tags 25 data on the packages 22, such as, for example, data on the sales points 14 to which the products are to be sent, the product-identifier codes, the number of copies of products 2 in each package 22, the weight of each individual copy, the overall weight, the shipping date, the date by which the return must be made, etc.

The shipping control unit 23 moreover records in the RFID tags 28 data on the boxes 27, such as, for example, the data of the transport delivery note in electronic format, the number of packages 22 contained, the number of copies of products 2 contained, the sales point 14 to which the products are to be sent, the weight of each individual copy, the weight of each package 22 contained, the overall weight of the box 27, etc.

The shipping control unit is moreover associated to the weighing device 24, which verifies, before the data are stored in the RFID tags 25 and in the RFID tags 28, that the weight of the package 22 and of the box 27 corresponds to the theoretical one obtained by multiplying the number of copies of products 2 by the weight of each product, generally supplied by the production network 4. Said operation of verification of the weight of each package 22 and of each box 27 before the respective RFID tag 25 and 28 is written, makes it possible to check that a right quantity of products 2 has effectively been sent to the sales point 14 and that the transporting service 15 is not overloaded with excessive amounts of products 2.

The boxes 27 of packages 22 are sent from the shipping station 17 to the transporting service 15, generally by means of the conveyor belt 29.

The transporting service 15, by using the means of transport 30, in general vans, loads the boxes 27 of packages 22 and preferably reads by the transport RFID read/write device 31, which is generally portable and associated to the means of transport 30, the RFID tags 25 of the packages 22 and the RFID tags 28 of the boxes 27 for carrying out a control on the load. In the case where the load is consistent with what is stored in the RFID tags 28, the transporting service 15 affixes its own electronic signature on each RFID tag 28 of the boxes 27 as sign of acceptance.

The transporting service 15 transports the boxes 27 of packages 22 to the respective sales points 14 of the sales network 6.

The transport RFID read/write device 31 is optional, and it is consequently possible for the transporting service 15 to comprise means of transport 30 to which no transport RFID read/write device 31 is associated; in this case, the transporting service 15 is responsible for transport and delivery of the boxes 27 using the RFID read/write device 26 of the distribution centre 10 and the RFID read/write device 34 located in the sales point 14, without making any control operation on the load.

Located in each sales point 14 is the sales processor 33, to which the RFID read/write device 34, preferably of a portable type, is connected. The RFID read/write device 34 is used for reading the RFID tags 25 of the packages 22 and the RFID tags 28 of the incoming boxes 27 in order to carry out a check on the contents and affix an electronic signature of acceptance and possibly update automatically a database on the sales processor 33 with the data read from the RFID tags 25 and 28. Furthermore, the RFID read/write device 34 is used at the moment of restitution of the unsold products 2, for writing the RFID tags 35 to be applied to packages 36 of returned products 8 to be sent back to the distribution centre 10. On each RFID tag 35 there are written for example data on the sales point 14 from which the package 36 of returned products 8 comes, on the weight of the package 36 of returned products 8, on the number of copies of a certain publishing-trade product 2 contained in the package 36 of returned products 8, on the shipping date, etc.

All the packages 36 of returned products 8 coming from a same sales point 14 and addressed to the distribution centre 10 are preferably organized in boxes 37, on each of which the sales point 14 affixes an RFID tag 32, whereon the data regarding the transport delivery note are stored in electronic format.

Said boxes 37 are sent to the distribution centre 10 by the transporting service 15, which preferably reads, by the transport RFID read/write device 31, the RFID tags 35 of the packages 36 of returned products 8 and the tags 32 of the boxes 37 for carrying out a control on the load, affixes its own electronic signature of acceptance on the RFID tags 32 of the boxes 37, and loads the boxes 37 on the means of transport 30.

The flow-management means 9 moreover comprise a conveyor belt 38, which is located in the distribution centre 10 and conveys the incoming returned products 8 from the returned-products loading station 18 to the sorting station 19, an RFID read portal 39, a returned-products loading control unit 40, a weighing device 41, a plurality of collection areas 42, each of which is equipped with a sorting RFID read/write device 43, a plurality of deviating devices 44 located along the conveyor belt 38 itself, and a sorting control unit 45.

The returned-products loading station 18 receives the packages 36 of returned products 8 coming from the sales points 14 labelled with the RFID tags 35. More precisely, the packages 36 of returned products 8 are conveyed by the conveyor belt 38 through the RFID read portal 39, which is located along the conveyor belt 38 and reads the contents of the RFID tags 35. The data stored in the RFID tag 35, in particular the data indicating the weight of the package 36 of incoming returned products 8, are transmitted to the returned-products loading control unit 40 and stored.

In the returned-products loading station 18 there is moreover located the weighing device 41, which weighs each package 36 of incoming returned products 8 and sends the datum to the returned-products loading control unit 40.

The returned-products loading control unit 40 compares the effective weight measured by the weighing device 41 with the weight calculated on the basis of the data indicating the weight read on the RFID tag 35, for example, on the basis of the weight per copy and the number of copies of a given publishing-trade product 2 present in the package 36 of returned products 8. The returned-products loading control unit 40 signals as faulty those packages 36 of returned products 8 for which there is a conflict between the weight declared and the effective weight, considering an appropriate range of variability to take into account different factors, such as, for example, humidity or the weight of the strap used for forming the packages.

Located in the sorting station 19 are a terminal section of the conveyor belt 38, the collection areas 42, each equipped with a sorting RFID read/write device 43, and the deviating devices 44. In particular, the deviating devices 44 are located along the conveyor belt 38 itself and are governed by the sorting control unit 45, which receives the data on the RFID tags 35 read by the sorting RFID read/write devices 43.

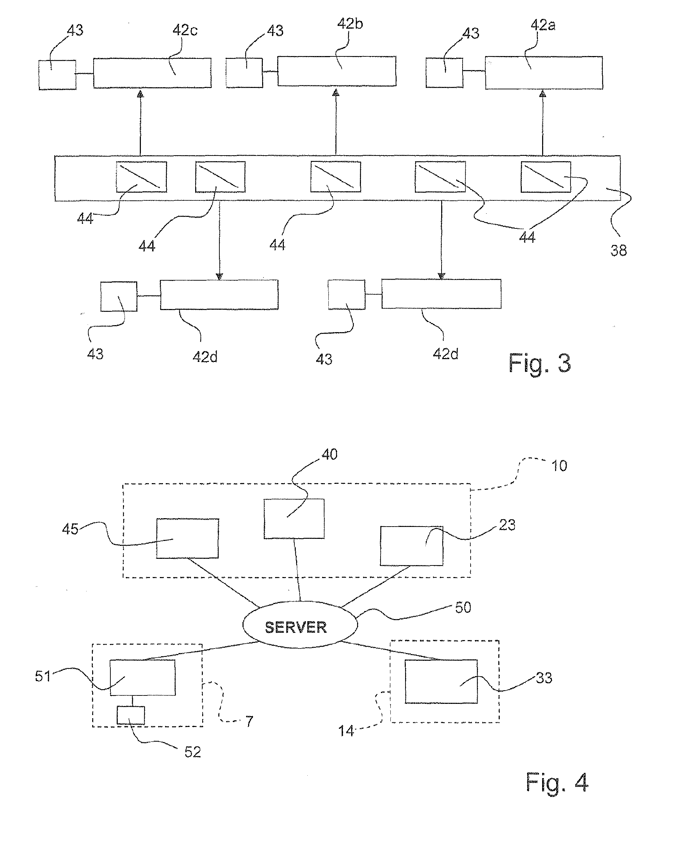

With reference to Figure 3, the conveyor belt 38 receives the packages 36 of returned products 8 already weighed on the weighing device 41 in the returned-products loading station 18 and, on the basis of the information received from the sorting RFID read/write devices 43, the sorting control unit 45 governs the deviating devices 44 so as to address the packages 36 of returned products 8 to respective collection areas 42 according to their destination. The destination of the packages 36 of returned products 8 is recognized on the basis of the data stored in the RFID tags 35 and read by the sorting RFID read/write devices 43.

For example, the packages 36 of returned products 8 signalled as faulty during the passage in the returned-products loading station 18 and packages 36 of returned products 8 selected on a sample basis for carrying out checks are sent to a first collection area 42a, where they are inspected manually.

The packages 36 of returned products 8 to be sent away for pulping are sent to a second collection area 42b.

The packages 36 that for any reason have not been identified, for example owing to the loss of the RFID tag 35 or on account of an incorrect entry of data by one of the sales points 14, are sent to a third collection area 42c.

The packages 36 of returned products 8 that are to be sent to the production network 4 are deviated towards fourth collection areas 42d. More precisely, the returned products 8 to be sent to a same production centre 7 or a same customer of the production centre 7 are collected in a respective one of the fourth collection areas 42d.

As already highlighted, the packages 36 of returned products 8 are sent to the production network 4 by means of the transporting service (not illustrated in the annexed figures), which can likewise be organized in a way similar to the transporting service 15 that is responsible for the distribution of the products 2 from the distribution network 5 to the sales network 6 and consequently can be equipped with RFID read/write means for control on the load.

With reference to Figure 4, the flow-management means 9 moreover comprise a server 50, to which the sorting control unit 45, the returned-products loading control unit 40 and the shipping control unit 23 are network connected for sharing and storing all the data regarding distribution of the publishing-trade products 2 and restitution of the returned products 8.

Each sales processor 33 of the sales points 14 can gain access to the server 50, for example by connection to the Internet, for knowing and updating in real time the situation regarding the distribution of the publishing-trade products 2, the restitution of the returned products 8, and the payment situation.

Finally, the flow-management means 9 comprise a production control unit 51 and a production RFID read/write device 52 for each production centre 7 and/or for each customer of the production centre 7.

The production control unit 51, located in the production centre 7 and/or at the customer's premises, can gain access to the server 50, for example by connection to the Internet, to know in real time the situation regarding the distribution of the publishing-trade products 2 and the restitution of the returned products 8 in order to proceed immediately to invoicing. The production control unit 51 is coupled to the production RFID read/write device 52 for writing RFID tags (not illustrated in the annexed figures) associated to sale-or-return products 2 leaving the production centre 7 and reading the RFID tags 35 and 32 coming into the production centre 7 or into the premises of the customer of the production centre 7, generally coming from the distribution network 5. In particular, the production centre 7 receives at input pallets containing a plurality of packages 36 of returned products 8, reads, by the production RFID read/write device 52, the RFID tags 35 associated to each package 36, and updates by the production control unit 51 a database in such a way as to verify the veracity of the data declared by the distribution centre 10 and proceed to invoicing of the products 2 actually sold.

The present invention affords the following advantages.

First of all, a more automated management of the process for distribution of the sale-or-return products 2 enables speeding-up of all the passages of distribution and guaranteeing of a greater reliability in the evaluation of the quantity of the delivered products 2 and of the returned products 8. In particular, the task of counting the returned products 8 with the distribution apparatus 1 according to the present invention is considerably simplified both for the distribution centre 10 and for the publisher 7, with considerable advantages in terms of reduction of the time required for invoicing and supply. A proper control of the returned products 8 moreover enables prevention of the constant economic losses for the distribution network 4 due to errors of counting in any point of the distribution chain, and to the undue subtraction of products 2 (for example, books, CDs, inserts) by some transporting services, some sales points 14, and some distribution centres 10. In particular, the proper control of the returned products 8 by the distribution apparatus 1 according to the present invention involves a considerable reduction in the packaging conventionally used for dissuading possible undue removal of products 2 from the packages and boxes.

In addition, thanks to the distribution apparatus 1 according to the present invention, each publisher 7 of the production network 4 can know in real time, or almost, the reaction of the market to given marketing operations. It is, in fact, possible to conduct campaigns of analysis on areas or particular sales points 14 in order to study new strategies of distribution and sale.

In addition, the possibility of using the sales processor 33 for carrying out in real time counting of the sold copies enables, via a simple connection to the Internet, the distribution centre 10 and the publisher 7 to have knowledge in real time of the situation of distribution and sale and enables a guarantee on an adequate supply of the products 2 in the various sales points 14: for example, in the case where the products 2 run out in a given sales point 14, the distribution centre 10 can see (automatically or upon confirmation of the sales point 14) to a redistribution of the products 2 before the term of expiration of the product. In this way, also the distribution of back issues is handled better.

Furthermore, each sales point 14 of the sales network 6, thanks to the RFID read/write device 34 of the RFID tags 35 and to the sales processor 33 can keep its own warehouse automatically updated, manage bookkeeping thereof with its own distributor in real time, analyse the distribution program, and plan it for the next few days and have a constant feedback on the expiration of the products to be returned. Advantageously, the apparatus 1 according to the present invention is compatible with the majority of the platforms available on the market for management and sharing of the data between sales points, production centres, and distribution centres.

Finally, the choice of use of an RFID tag 25, 35 for identifying the packages 22 of products 2 and the packages 36 of returned products 8, as well as of the RFID tags 28 and 32 for identification of the boxes 27 and 37, guarantees excellent performance of the apparatus 1 and of the method according to the present invention. The RFID tags 25, 35, 27 and 37, in fact, function even though handled with insufficient care or if displayed in unfavourable conditions and are easily applied on any product. All the RFID tags are moreover readable even when they are not visible, and hence even when the packages 22 and 36 are arranged in boxes or pallets. In particular, RFID tags of an active type possess a supply source of their own that enables them to function continuously and to have a range much greater than RFID tags of a passive type. The use of RFID tags of an active type thus advantageously makes it possible to carry out, for example, reading on the ground of the RFID tags loaded on a means of transport, without the need to bring the reader up to the packages or up to the pallets of products for sale or returned products. Furthermore, the RFID tags 25, 35, 27 and 37 can be protected with passwords and other security systems.

Finally, it is evident that modifications and variations can be made to the apparatus and to the method described herein, without this implying any departure from the scope of the annexed claims.

## Claims

1. An apparatus for distribution of sale-or-return products comprising:
a plurality of products (2, 8) including sale-or-return products (2) and returned products (8);
a distribution centre (10) for distributing the sale-or-return products (2);
a sales point (14) for the sale-or-return products (2); and flow-management means (9), for managing a flow of sale-or-return products (2) from the distribution centre (10) to the sales point (14) and a flow of returned products (8) from the sales point (14) to the distribution centre (10);
the apparatus (1) being **characterized in that** the flow-management means (9) comprise RFID tags (25, 28, 32, 35), associated to the sale-or-return products (2) and to the returned products (8), and RFID read-and-write means (26, 31, 34, 39, 43, 52).

2. The apparatus according to Claim 1, **characterized in that** the RFID read-and-write means (26, 31, 34, 39, 43, 52) comprise at least one first RFID read/write device (26), located in the distribution centre (10) for writing first RFID tags (25, 28) associated to outgoing sale-or-return products (2), and a second RFID read/write device (34) located in the sales point (14) for reading first RFID tags (25, 28) of incoming sale-or-return products (2) and writing second RFID tags (32, 35) associated to outgoing returned products (8).

3. The apparatus according to Claim 2, **characterized in that** the flow-management means (9) comprise:
a first weighing device (24) for weighing the outgoing sale-or-return products (2); and
a shipping control unit (23), which is coupled to the weighing device (24) for comparing the theoretical data of weight of the sale-or-return products (2) with the measurements of the weighing device (24) and is coupled to the first RFID read/write device (26) for writing on the first RFID tags (25) the measurements of the weighing device (24) for the outgoing sale-or-return products (2).

4. The apparatus according to Claim 2 or Claim 3, **characterized in that** the RFID read-and-write means (26, 31, 34, 39, 43, 52) comprise an RFID read portal (39), located in the distribution centre (10) for reading second RFID tags (32, 35) associated to the incoming returned products (8).

5. The apparatus according to Claim 4, **characterized in that** the second RFID tags (35) contain data indicating the weight of the incoming returned products (8) and **in that** the flow-management means (9) comprise:
a weighing device (41) for weighing the incoming returned products (8); and
a returned-products loading control unit (40), coupled to the RFID read portal (39) and to the weighing device (41) for comparing the data indicating the weight read by the RFID read portal (39) with measurements of the weighing device (41).

6. The apparatus according to any one of the preceding claims, **characterized in that** the flow-management means (9) comprise:
a plurality of collection areas (42);
a plurality of sorting RFID read/write devices (43) associated to respective collection areas (42); and
handling means (38, 44, 45) for conveying products (8) returned to respective collection areas (42) on the basis of data stored in the tags (32, 35) associated to the returned products (8) and read by the sorting RFID read/write devices (43).

7. The apparatus according to Claim 6, **characterized in that** the handling means (38, 44, 45) comprise:
a conveyor belt (38);
a sorting control unit (45), connected to the sorting RFID read/write devices (43); and
a plurality of deviating devices (44), associated to respective collection areas (42) and controlled by the sorting control unit (45) for deviating returned products (8) from the conveyor belt (38) to the respective collection areas (42), selectively on the basis of the data stored in the tags (32, 35) associated to the returned products (8) and read by the sorting RFID read/write devices (43).

8. The apparatus according to any one of the preceding claims, **characterized in that** it comprises at least one centre (7) for producing the sale-or-return products (2) and **in that** the RFID read/write means (26, 31, 34, 39, 43, 52) comprise a production RFID read/write device (52) located in the production centre (7).

9. The apparatus according to any one of the preceding claims, **characterized in that** the flow-management means (9) comprise means (30) for transporting the products (2, 8) and **in that** the RFID read-and-write means (26, 31, 34, 39, 43, 52) comprise at least one transport RFID read/write device (31) associated to the means of transport (30).

10. A method for distribution of sale-or-return products comprising the step of managing a flow of sale-or-return products (2) from a distribution centre (10) to a sales point (6) and a flow of returned products (8) from the sales point (6) to the distribution centre (10);
the method being **characterized in that** the step of managing the flow comprises using RFID tags (25, 28, 32, 35) associated to the sale-or-return products (2) and to the returned products (8).

11. The method according to Claim 10, **characterized in that** the step of using RFID tags (25, 28, 32 35) comprises:
associating first RFID tags (25, 28) to sale-or-return products (2) leaving the distribution centre (10);
writing data on the sale-or-return products (2) leaving the distribution centre (10) on the respective first RFID tags (25, 28);
reading the first RFID tags (25, 28) upon entry of the sale-or-return products (2) into the sales point (14).

12. The method according to Claim 11, **characterized in that** the data on the sale-or-return products (2) comprise measured data of the weight and **in that** it comprises the steps of:
determining a weight of the sale-or-return products (2) leaving the distribution centre (10); and
comparing theoretical data of weight of the sale-or-return products (2) with the weight determined of the sale-or-return products (2).

13. The method according to any one of Claims 10 to 12, **characterized in that** the step of using RFID tags (25, 28, 32, 35) comprises:
associating second RFID tags (32, 35) to returned products (8) leaving the sales point (14);
writing data on the returned products (8) leaving the sales point (14) in the respective second RFID tags (32, 35); and
reading the second RFID tags (32, 35) upon entry of the returned products (8) into the distribution centre (10).

14. The method according to Claim 13, **characterized in that** the data on the returned products (8) comprise data indicating the weight and **in that** it comprises the steps of:
determining a weight of the returned products (8) entering the distribution centre (10); and
comparing data indicating the weight read at entry of the returned products (8) into the distribution centre (10) with the weight determined of the returned products (8).

15. The method according to any one of Claims 10 to 14, **characterized in that** the step of managing the flow comprises sorting the returned products (8) entering the distribution centre (10) on the basis of the data contained in the respective RFID tags (32, 35).

16. The method according to Claim 15, **characterized in that** the step of sorting comprises:
conveying the returned products (8) entering the distribution centre (10) along a path (38);
providing a plurality of collection areas (42) along the path (38); and
deviating the returned products (8) entering the distribution centre (10) to respective collection areas (42) selectively on the basis of data stored in the respective RFID tags (32, 35).

17. The method according to Claim 10, **characterized in that** the step of using RFID tags (25, 28, 32, 35) comprises producing, in a production centre (7), sale-or-return products (2) to be supplied to the distribution centre (10) and associating first RFID tags (25) to sale-or-return products (2) leaving the production centre (7).

18. The method according to Claim 10, **characterized in that** the step of using RFID tags (25, 28, 32, 35) comprises receiving, in a production centre (7), returned products (8) coming from the distribution centre (10), and reading second RFID tags (35) associated to returned products (8) entering the production centre (7).
